# EUROPEAN PATENT SPECIFICATION

(11) **EP 2 431 626 B1**
(45) Date of publication and mention of the grant of the patent: **04.09.2013**
(21) Application number: 11180396.1
(22) Date of filing: 07.09.2011
(51) Int. Cl.: F16D 28/00, F16D 48/06, F16D 23/12

(54) **Clutch controlling device**
Kupplungssteuerungsvorrichtung
Dispositif de commande d'embrayage

(30) Priority: 16.09.2010 JP 2010207761
(43) Date of publication of application: 21.03.2012
(73) Proprietor: Univance Corporation, Shizuoka 431-0494 (JP)
(72) Inventor: Kato, Tadahiko, Kosai-shi, Shizuoka 431-0494 (JP); Muramatsu, Yoshihiro, Kosai-shi, Shizuoka 431-0494 (JP)
(74) Representative: Thun, Clemens

(56) References cited:
- EP-A1- 2 202 423
- EP-A2- 2 105 336
- DE-A1- 19 728 827
- GB-A- 2 351 129
- US-A1- 2004 188 218
- US-A1- 2005 092 569

## Description

### BACKGROUND OF THE INVENTION

### 1. Field of the Invention

The present invention relates to a clutch controlling device that actuates a clutch release mechanism by using an actuator and particularly relates to a technique that detects a release-operation starting position changed by wearing of a clutch disc, and appropriately controls disconnection/connection and transmitted torque of a clutch.

### 2. Description of the Related Arts

As a transmission for a vehicle, there is an automatic-controlling type manual transmission (AMT: mechanical-type automatic transmission) which carries out speed changing operations by an actuator. An AMT vehicle equipped with such a transmission uses an automatic clutch which automatically disconnects/connects (disconnection and connection) a friction clutch device (hereinafter, described as "clutch") provided between an engine and the transmission in synchronization with the speed changing operations of the transmission by an actuator attached thereto. In such an AMT vehicle, a method of detecting the acceleration, etc. of the vehicle and controlling the automatic clutch has been proposed in order to prevent shock from being applied to the vehicle upon disconnection/connection of the clutch. Particularly, upon disconnection of the automatic clutch, large shock is applied to the vehicle if the instructing timing of the clutch disconnection is not appropriate; therefore, for example, Patent Document 1 has proposed a method of appropriately tuning the instructing timing of the clutch disconnection by monitoring the rotating speed of an engine and the rotating speed of the clutch. The configuration of the clutch used in such an automatic clutch is basically the same as a manual transmission (MT: mechanical-type transmission) for a vehicle, wherein a clutch disc coupled to an input shaft of the transmission is pushed against a flywheel of an engine via a pressure plate by a diaphragm spring so as to connect the flywheel with the input shaft of the transmission. In such a clutch, due to wearing of the clutch disk, stroke variations are generated in a clutch release mechanism connected to the clutch disc. However, in the case in which an oil hydraulic cylinder is employed as the actuator of the automatic clutch, a release fork is actuated by using a non-adjustable release cylinder, thereby cancelling out the stroke variations of the clutch release mechanism.

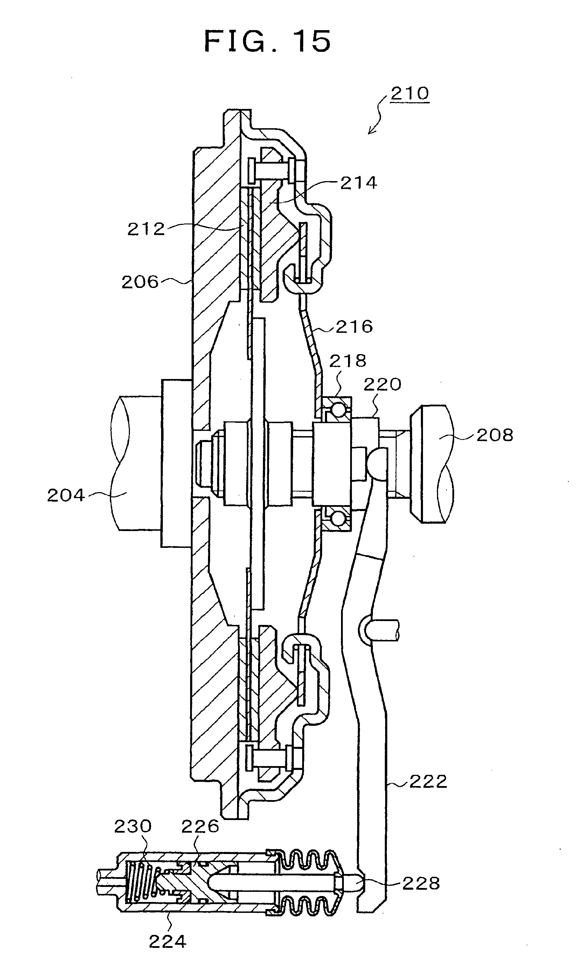

FIG. 15 is an explanatory drawing showing a conventional clutch using such a non-adjustable release cylinder. In FIG. 15, the clutch 210 is positioned between an engine output shaft 204 and a transmission input shaft 208 and is in a connected state, wherein a diaphragm spring 216 pushes a clutch disc 212 against a flywheel 206 via a pressure plate 214. Moreover, because of the working of a spring 230 provided in a release cylinder 224, a pushrod 228 slightly pushes a release bearing 218 against the diaphragm spring 216 via a release fork 222 and a release sleeve 220. Even when the initial position of the release bearing 218 is retracted, in other words, the position thereof upon initiation of release operation is moved to the transmission side due to wearing of the clutch disc 212, a piston 226 in the release cylinder 224 is moved to the spring 230-side via the release fork 222; as a result, disconnection/connection and transmitted torque of the clutch 210 can be controlled always by constant cylinder stroke.

[Patent Document 1]Japanese Patent Application Laid-Open (*kokai*) No. 2003-202038
[Patent document 1] Japanese Patent Application Laid-Open Publication No. 2002-232427
[Patent document 2] Japanese Patent Application Laid-Open Publication No. 2001-320415

However, if air is mixed in with clutch fluid, working of the non-adjustable release cylinder used as the actuator of such an automatic clutch becomes insufficient or uncertain. Therefore, cumbersome procedures and sufficient attention are required upon assembling or upon maintenance, and many constituent parts including an oil-hydraulic circuit are contained and complex, thereby leading to a problem of increase in the cost of the automatic clutch. In order to avoid this problem, employing an electric actuator in the automatic clutch has been proposed. However, in that case, controlling the clutch while taking stroke variations in the clutch release mechanism when the clutch disc is worn into consideration, in other words, while always detecting change in the touch point of the clutch with respect to the stroke of the release fork is a task.

US 2005/092569 A1 and DE 197 28 827 A1 show a clutch controlling device according to the preamble of claim 1.

### SUMMARY OF THE INVENTION

According to the present invention to provide a clutch controlling device which uses an electric motor as an actuator for actuating a clutch release mechanism, detects a release-operation starting position changed by wearing of a clutch disc, and appropriately controls disconnection/connection and transmitted torque of a clutch.

In order to achieve this object, the present invention is configured in a below manner. The present invention is directed to a clutch controlling device actuating a clutch release mechanism and controlling disconnection/connection and transmitted torque of a clutch by displacement of a diaphragm spring associated with the clutch release mechanism.

Such a clutch controlling device is provided with: an electrically driven actuator; a cam capable of being actuated between a save position and an end position by the actuator, the cam changing the clutch from a connected state to a disconnected state by moving forward from an initial position to a disconnection position, the cam changing the clutch to the connected state by moving backward from the disconnection position to the initial position; a cam follower capable of being actuated to reciprocate in one direction in association with the forward/backward actuation of the cam, the cam follower transmitting displacement of the cam to the clutch release mechanism; and a control unit moving the cam backward and setting a position at which the backward movement is restricted by a restricting member as the save position of the cam, the control unit moving the cam forward and setting a position at which pushing of the cam follower is started (release operation starting position) as the initial position of the cam. Furthermore, the cam is provided with: a coupling part fixed to a driving part of the actuator a cam part having a cam shape and being actuated to move forward/backward in a predetermined range with respect to the coupling part, and a cam spring installed between the coupling part and the cam part and having a spring constant smaller than the diaphragm spring; and the cam part is moved backward in association with the coupling part when the coupling part actuates the cam part in a direction to move the cam part backward from the initial position; and is moved forward to the initial position by load of the cam spring via the coupling part when the coupling part actuates the cam part in a direction to move the cam part forward from the save position, then transmits the load of the cam spring to the diaphragm spring within the predetermined range, and then is moved forward in association with the coupling part.

The cam has: a stop part abutting the restricting member and restricting the backward movement of the cam to the save position; an approach part not pushing the cam follower upon forward movement from the save position to the initial position; and a stroke part pushing the cam follower to an actuating direction and enabling disconnection control of the clutch upon forward movement from the initial position.

Herein, the stop part of the cam has a shape that maintains the save position regardless of movement in an actuation starting position of the cam follower; an approach part of the cam has a shape that does not push the cam follower regardless of movement in the actuation starting position of the cam follower; and a stroke part of the cam has a shape that maintains a relation between a forward movement amount of the cam and an actuation amount of the cam follower regardless of movement in the initial position of the cam.

The control unit drives the actuator to move the cam backward, detects a state change of the actuator at a point when the stop part of the cam abuts the restricting member and the backward movement is restricted, and sets the save position of the cam; and drives the actuator to move the cam forward from the save position, detects a state change of the actuator at a point when the stroke part of the cam starts pushing the cam follower, and sets the initial position of the cam.

Herein, at least one of a current, speed, and acceleration of the actuator is detected as the state change of the actuator, and a position of the cam at a point when the detected value reaches a predetermined value is set as the save position or the initial position of the cam.

The control unit has characteristic information defining a corresponding relation between movement in the initial position of the cam and movement in the disconnection position of the cam; and, when the initial position of the cam is set, determines the disconnection position corresponding to the set initial position and controls the disconnection/connection of the clutch based on the characteristic information.

The control unit has correction information defining a relation between an actuation position of the cam and the transmitted torque of the clutch, the relation defined to correspond to movement in the initial position of the cam; and, when the transmitted torque of the clutch is to be controlled, corrects the actuation position of the cam based on the correction information corresponding to the determined initial position of the cam.

Furthermore, the control unit outputs a warning when the initial position of the cam is set to exceed a position corresponding to a wearing limit of a clutch disc and executes the setting of the initial position of the cam at predetermined timing.

The cam may be provided with a retention part at which a pressure angle with the cam follower is 0 degree, the retention part being provided in an end region of the stroke part.

According to the invention of the present application, a cam driven by an electric motor as an actuator of an automatic clutch is used, a release-operation starting position changed by wearing of a clutch disc is detected, and disconnection/connection and transmitted torque of the clutch are controlled. Therefore, compared with the case in which the non-adjustable release cylinder is used, improvement in assembling workability and maintainability of the clutch and reduction in cost are enabled. Moreover, according to the invention of the present application, the cam shape by which the relation between the actuation amount of the cam and the actuation amount of a cam follower is not changed regardless of the wearing amount of the clutch disk is employed. Therefore, even when the clutch disc is worn, controllability of the clutch can be maintained. Moreover, according to the invention of the present application, the cam is provided with a cam spring having a small spring constant than that of the diaphragm spring between a connecting plate fixed to a motor shaft and a cam plate engaged with the cam follower. Therefore, even when the stop position of a motor is varied upon initial position setting of the cam, stable initial load can be input to a clutch release mechanism. Furthermore, according to the present invention, characteristic information defining the corresponding relation between movement in the initial position of the cam and movement in a touch point and correction information defining the relation between the actuation position of the cam and the transmitted torque in a manner corresponding to the movement in the touch point are provided ; the touch point moved depending on wearing of the clutch disc is determined based on the characteristic information to control the disconnection/connection of the clutch; and the actuation position of the cam upon control of the transmitted torque of the clutch is corrected based on the correction information. Therefore, simple control of the automatic clutch can be carried out without the need to detect the acceleration of a vehicle or monitor the rotating speed of an engine and the rotating speed of the clutch. The above and other objects, features, and advantages of the present invention will become more apparent from the following detailed description with reference to the drawings.

### BRIEF DESCRIPTION OF THE DRAWINGS

FIG. 1 is an explanatory drawing showing an embodiment of a clutch provided with a clutch controlling device according to the present invention;
FIG. 2 is an explanatory drawing showing a start state of a release operation of FIG. 1;
FIG. 3 is an explanatory drawing showing an end state of the release operation of FIG. 1;
FIG. 4 is an explanatory drawing showing a start state of setting of an initial position in the case in which a clutch disc is worn;
FIGS. 5A to 5C are explanatory drawings showing the initial position setting of FIG. 4 and a start state of the release operation;
FIG. 6 is an explanatory drawing showing an end state of the release operation of FIG. 4;
FIG. 7 is an explanatory drawing showing an actuation range of a cam in the case in which the clutch disc is not worn;
FIG. 8 is an explanatory drawing showing an actuation range of the cam in the case in which the clutch disc is worn;
FIG. 9 is a flow chart showing an example of an initial position setting procedure of the clutch controlling device;
FIGS. 10A to 10C are explanatory drawings showing the relation between the load-flexure characteristics of a diaphragm spring and the actuation ranges of the cam;
FIG. 11 is an explanatory drawing showing the relation between movement in the initial position of the cam and movement in the disconnection position of the cam;
FIG. 12 is an explanatory drawing showing the relation between the actuation positions of the cam and the transmitted torque of the clutch;
FIG. 13 is an explanatory drawing showing another embodiment of the clutch provided with a clutch controlling device according to the present invention;
FIG. 14 is an explanatory drawing showing the state in which a clutch disc of FIG. 13 is worn; and
FIG. 15 is an explanatory drawing showing a clutch using a conventional non-adjustable release cylinder.

### DETAILED DESCRIPTION OF THE PREFERRED EMBODIMENTS

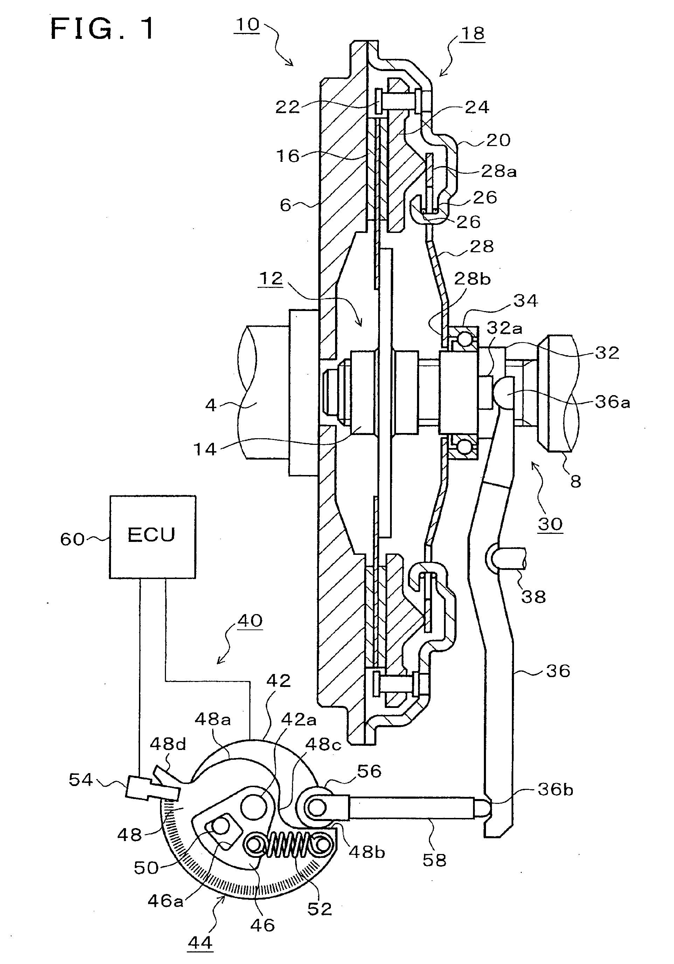

FIG. 1 is an explanatory drawing showing an embodiment of a clutch provided with a clutch controlling device according to the present invention and showing the state that the clutch, in which a clutch disc is brand new (unworn state), is connected. In FIG. 1, the clutch 10 is a device which connects/disconnects transmission of torque from a flywheel 6 rotated integrally with an engine output shaft 4 to a transmission input shaft 8 and is composed of: a clutch disc assembly unit 12, a clutch cover assembly unit 18, a clutch release mechanism 30, and the clutch controlling device 40. The clutch disc assembly unit 12 is provided with a clutch hub 14 splined to a distal end of the transmission input shaft 8 and a clutch disc 16 provided at the clutch hub 14 and can be actuated to move forward/backward in the axial direction of the transmission input shaft 8. The clutch cover assembly unit 18 is provided with: a clutch cover 20, which rotates integrally with the flywheel 6; a pressure plate 24, which is guided by guide pins 22 provided on the clutch cover 20 and can be actuated in the axial direction of the engine output shaft 4; and a diaphragm spring 28, which is supported by the clutch cover 20 by employing a pivot ring 26 as a fulcrum point. An outer peripheral part 28a of the diaphragm spring 28 pushes the clutch disc 16 against the flywheel 6 via the pressure plate 24 by the elasticity employing the pivot ring 26 as the fulcrum point, and the clutch 10 transmits the torque of the engine output shaft 4 to the transmission input shaft 8 via the clutch hub 14 by the friction force generated by sandwiching the clutch disc 16 by the pressure plate 24 and the flywheel 6. The clutch release mechanism 30 is provided with: a release sleeve 32, which is splined to the transmission input shaft 8; a release bearing 34, which has an inner ring fitting in an outer peripheral part of the release sleeve 32; a release fork 36, which is supported by a fork support 38 provided at a clutch housing (not shown); and a pushrod 58, which has a distal end engaged with a lower end part 36b of the release fork 36 and has another end provided with a roller 56. The release fork 36 forks into two in the release sleeve 32 side, and each of distal end parts 36a thereof abuts an engaging part 32a provided on the release sleeve 32. The pushrod 58 is supported by a support part (not shown) so as to be able to linearly move in a direction in which the release fork 36 is swung. The release fork 36 is slightly biased counterclockwise by, for example, a spring (not shown) . Therefore, the distal end parts 36a try to move the release sleeve 32 toward the clutch hub 14 via the engaging part 32a; however, an outer-ring end face of the release bearing 34 abuts an inner peripheral part 28b of the diaphragm spring 28 and suppresses movement of the release sleeve 32. The clutch controlling device 40 is provided with: a motor 42, which is an electric actuator; a cam 44, which is driven by the motor 42; the roller 56 (cam follower), which transmits displacement of the cam 44 to the clutch release mechanism 30; an encoder 54 for detecting an actuation position of the cam 44; and an ECU (controlling unit) 60, which drives and controls the motor 42 based on signals from the encoder 54. The cam 44 is composed of: a connecting plate 46, which is coupled to a drive shaft 42a of the motor 42; a cam plate 48, which is pivotally supported so as to be rotatable coaxially with the connecting plate 46; and a cam spring 52, which is stretched between the connecting plate 46 and the cam plate 48. Herein, the roller 56 smoothly transmits radial displacement of the cam plate 48 to the pushrod 58 as the displacement of the cam 44, and the encoder 54 outputs a signal to the ECU 60 as the actuation position of the cam 44 in accordance with the rotation of the cam plate 48. The cam plate 48 is slightly biased clockwise by the tensile force of the cam spring 52, is rotatable with respect to the connecting plate 46 within a range by which a stopper pin 50 provided on the cam plate 48 is restricted by a stopper hole 46a of the connecting plate 46, and, outside the restricting range, follows the connecting plate 46 and rotates integrally. The cam plate 48 has: a cam-shaped stroke part 48a, which can push the roller 56 in the direction in which the roller 56 is actuated upon clockwise rotation (upon forward movement of the cam); a stop part 48b, which can push the roller 56 in a non-actuatable direction, in other words, in the direction orthogonal to the actuatable direction of the pushrod 58 upon counterclockwise rotation (upon backward movement of the cam); a cam-shaped approach part 48c, which does not push the roller 56 between the stroke part 48a and the stop part 48b; and a limit part 48d, which serves as a clockwise actuation limit (end position of the cam). In FIG. 1, the cam 44 is at a save position since the clutch controlling device 40 is in a standby state. The cam 44 stops at a position at which the stop part 48b abuts the roller 56, wherein the cam plate 48 is in the state in which the stopper pin 50 is engaged with the stopper hole 46a of the connecting plate 46. In the present embodiment, the cam plate 48 is formed as a peripheral cam, but may be another cam type such as a cylindrical cam. Usage of a servo motor unit provided with a speed reducing mechanism is expected for the motor 42; however, an electric actuator of another type can be also used. As long as the resolution power that is required for clutch control can be obtained, the encoder 54 may employ any method such as a magnetic method or an optical method. Instead of the configuration in which the encoder is provided in the cam plate 48 side like the present embodiment, it is also possible to provide the encoder in the connecting plate 46 side or in the motor 42 side. In that case, when a signal corresponding to the angle of rotation of the motor 42 before speed reduction is configured to be output, more precise resolution power can be obtained. The ECU 60: can detect an actuation angle and/or rotation speed of the cam plate 48 based on the signals from the encoder 54; drives the cam 44 at predetermined timing, for example, upon start or stop of an engine; detects change in the state of the motor 42 caused by load when the cam plate 48 abuts the roller 56 such as the rotation speed or acceleration of the motor 42 or the cam plate 48 or change in the current which flows in the motor 42; and sets an initial position of the cam 44 serving as a starting position of a release operation (clutch disconnecting operation) of the clutch 10. The ECU 60 stores, in advance, characteristic information, which defines the corresponding relation between movement in the initial position of the cam 44 and movement in the touch point caused by wearing of the clutch disc 16, for example, as a numerical table or calculating formula and sets the actuation angle of the cam 44 corresponding to the touch point based on the set initial position and the characteristic information. Note that the touch point is a position at which a connection started state (engaged state) is achieved upon clutch connection, in other words, is a position at which the pressure plate contacts the clutch disc and, upon clutch disconnection, is a disconnection position of the clutch. Furthermore, the ECU 60 stores, in advance, correction information, which defines the relation between the actuation position of the cam 44 and transmitted torque so that the relation corresponds to the movement in the touch point, for example, as a numerical table or calculating formula; and, upon a release operation, the ECU can correct the actuation angle of the cam 44 based on the correction information corresponding to a calculated touch point. In order to disconnect/connect the clutch 10 without causing large shock upon switching of speed change levels of the transmission, the transmitted torque of the clutch 10 upon disconnection/connection has to be appropriately controlled. Therefore, the ECU 60 controls the motor 42 based on the actuation angle of the cam 44 or a correction value thereof corresponding to a touch point derived from the set initial position of the cam.

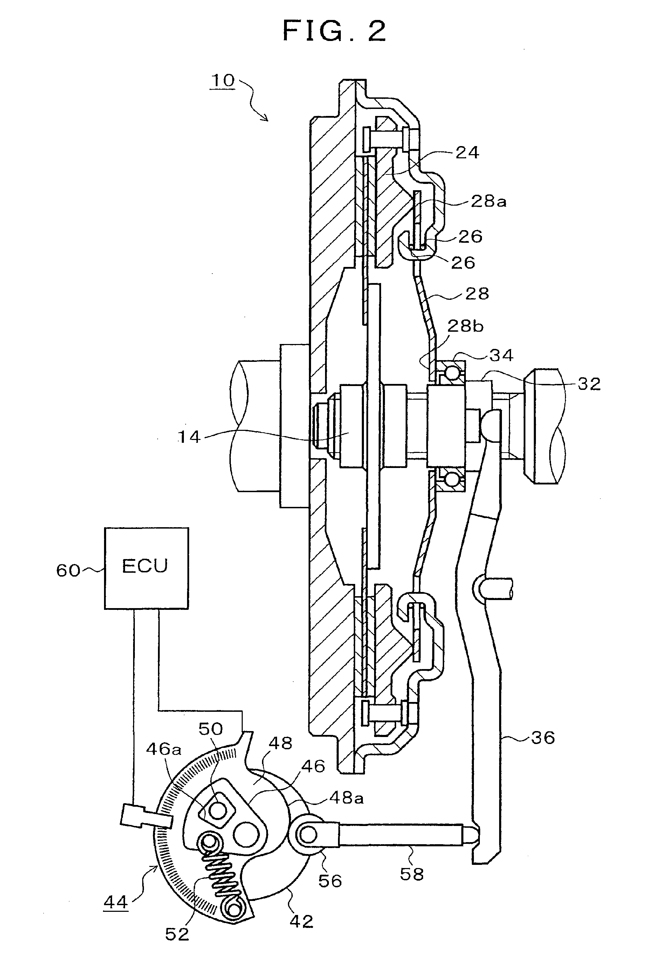

FIG. 2 is an explanatory drawing showing a start state of the release operation of FIG. 1 and is the same as FIG. 1 except for the cam 44 at the initial position, in other words, except for the cam plate 48, the connecting plate 46, and the tensile state of the cam spring 52. In FIG. 2, since the stopper pin 50 is not engaged with the stopper hole 46a of the connecting plate 46, the cam plate 48 is biased clockwise by the tensile force of the cam spring 52 and pushes the pushrod 58 toward the release fork 36 via the roller 56 abutting the stroke part 48a. However, since the spring constant of the cam spring 52 is much smaller than the spring constant of the diaphragm spring 28, the cam plate 48 is retained in the state in which movement of the release sleeve 32 is inhibited by the diaphragm spring 28. The release operation is started by, from this state, driving the motor 42 by the ECU 60 to rotate the connecting plate 46 clockwise, causing the stopper hole 46a to be engaged with the stopper pin 50, and rotating the cam plate 48 clockwise. When the release operation is started, the cam plate 48 rotates clockwise from the state of FIG. 2, and the stroke part 48a pushes the roller 56; as a result, the release bearing 34 pushes the inner peripheral part 28b of the diaphragm spring 28 toward the clutch hub 14 via the pushrod 58, the release fork 36, and the release sleeve 32. The pushing of the release bearing 34 displaces the inner peripheral part 28b of the diaphragm spring 28 toward the clutch hub 14 while using the pivot ring 26 as the fulcrum point. This displacement works so as to invert the outer peripheral part 28a (displaces the outer peripheral part toward the opposite side of the inner peripheral part 28b); as a result, the pushing force toward the pressure plate 24 is reduced, and the clutch 10 undergoes a transition from the connected state to a disconnected state via a half-clutch state.

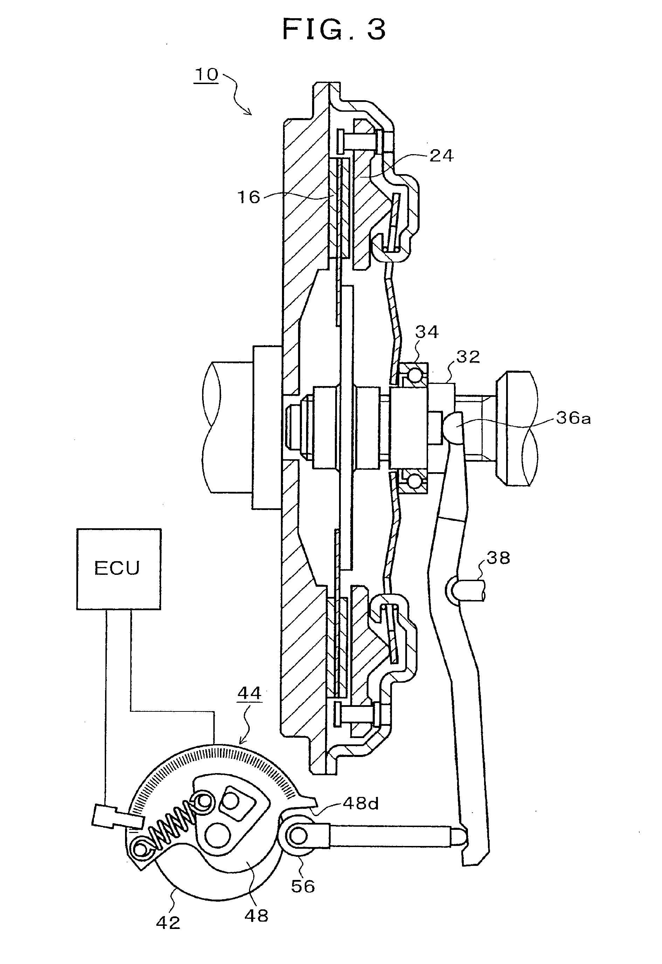

FIG. 3 is an explanatory drawing showing an end state of the release operation of FIG. 1 and showing the state that the release fork 36 has been swung counterclockwise from the state of FIG. 2 along forward movement of the cam 44 while using the fork support 38 as a fulcrum point and that the distal end parts 36a have moved the release sleeve 32 and the release bearing 34 forward (moved them toward the clutch hub 14). At this point, the pushing of the pressure plate 24 against the clutch disc 16 has been cancelled, and the clutch 10 is completely disconnected. Therefore, actuation of the cam plate 48 is stopped in the state in which the stroke part 48a is abutting the roller 56; however, if the cam plate 48 is further moved forward, the limit part 48d abuts the roller 56, and this position serves as the actuation limit.

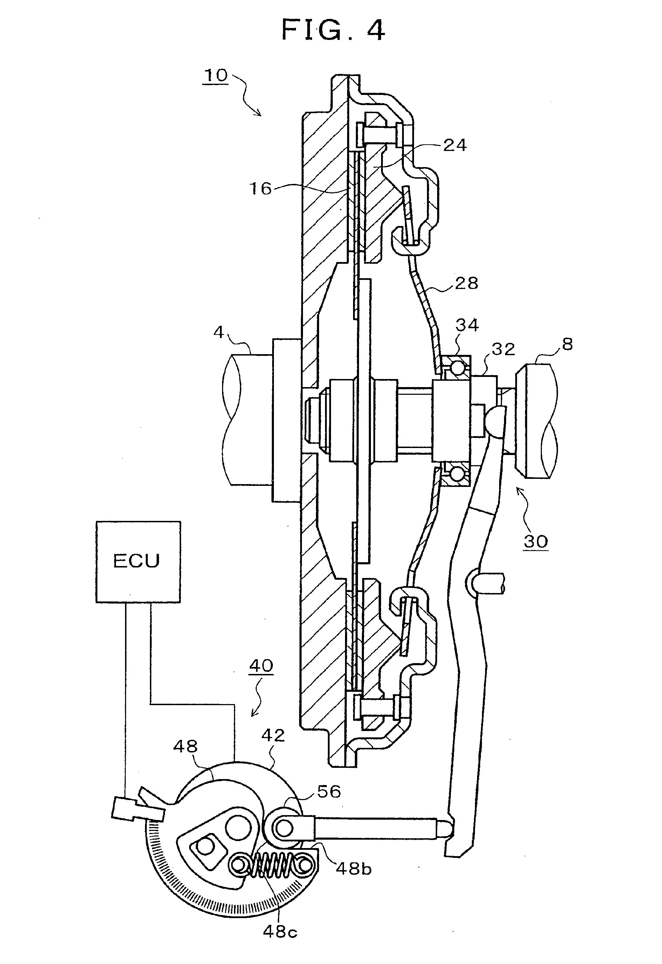

FIG. 4 is an explanatory drawing showing a state to start setting of the initial position of the cam in the case in which the clutch disk is worn, wherein FIG. 4 is the same as FIG. 1 except that the clutch disc 16 is at a wearing limit or in a state close to the wearing limit and except the position relations of the diaphragm spring 28 and the clutch release mechanism 30 changed along with that. In FIG. 4, the thickness of the worn clutch disk 16 has been reduced from the brand-new state shown in FIG. 1; the clutch 10 is in a completely connected state (full-engaged state); and, from the state of FIG. 1, the pressure plate 24 has been moved to the engine output shaft 4 side, and the release sleeve 32 and the release bearing 34 have been moved to the transmission input shaft 8 side. The cam plate 48 is at a position at which the stop part 48b is abutting the roller 56, and the roller 56 is moved to a position closer to the approach part 48c, which is in the direction toward the center of the cam plate 48, than the case in which the clutch disc 16 of FIG. 1 is not worn. Note that the approach part 48c has a shape that a gap is formed between the approach part and the roller 56 even when the clutch disc 16 is at the wearing limit. FIG. 4 shows the standby state of the clutch controlling device 40, for example, in the case in which the engine is stopped. If an operation to start the engine is carried out, the clutch controlling device 40 drives the motor 42 and rotates the connecting plate 46 clockwise as an initializing operation from this state, thereby moving the cam plate 48 forward and executing setting of the initial position of the cam 44.

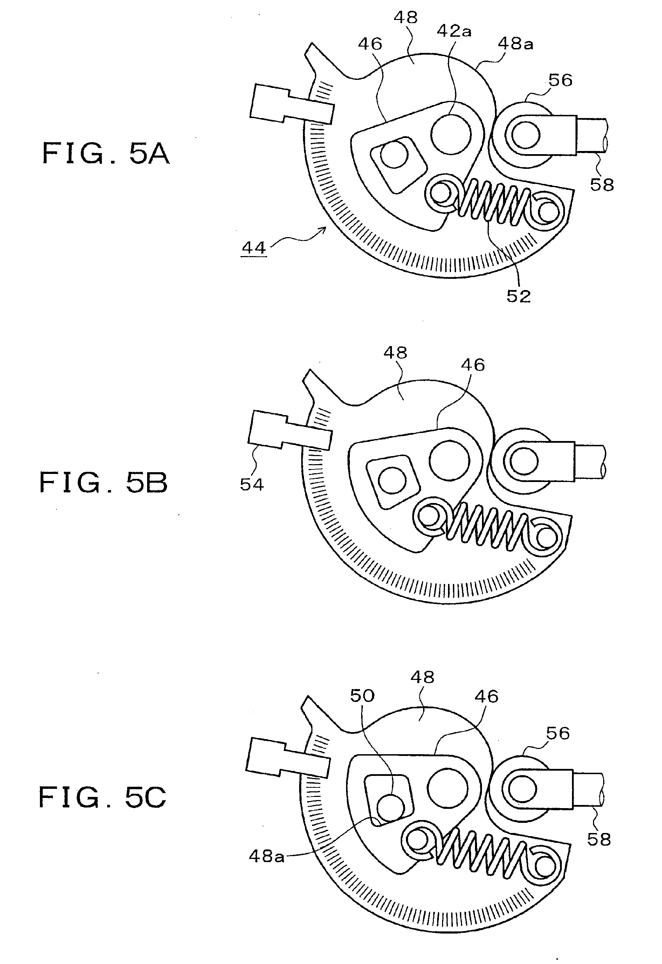

FIGS. 5A to 5C are explanatory drawings showing the initial position setting of FIG. 4 and the start state of the release operation by focusing on the clutch controlling device 40, wherein the motor 42 and the ECU 60 are omitted. In FIGS. 5A, 5B, and 5C, the angles of the cam plate 48 are the same; however, the positions of the connecting plate 46 with respect to the cam plate 48 are mutually different.

FIG. 5A shows the state that the stroke part 48a is abutting the roller 56 in an initial-position setting operation, rotation of the cam plate 48 is stopped, and the initial position of the cam 44 is set; FIG. 5B shows the state that the initial-position setting operation is finished and the connecting plate 46 is stopped; and FIG. 5C shows the state that the release operation has been started, the stopper hole 46a of the connecting plate 46 is abutting the stopper pin 50, and the cam plate 48 starts forward movement. As shown in FIG. 5A, when the connecting plate 46 fixed to the motor shaft 42a rotates clockwise from the state of FIG. 4, the cam plate 48 follows that and is also moved forward by the tensile force of the cam spring 52. Upon start of the rotation of the connecting plate 46, little load is applied to the motor 42. However, when the stroke part 48a abuts the roller 56 and suppresses rotation of the cam plate 48, the tensile force of the cam spring 52 works as a load to the motor 42, and the current that flows in the motor 42 is increased. When this increase in the current is detected, the ECU 60 stops driving the motor 42 and sets the actuation angle of the cam plate 48, which is detected by the signal from the encoder 54, as the initial position of the cam 44. However, due to the time lag from the point when the stroke part 48a abuts the roller 56 until the rotation of the motor 42 is stopped, the connecting plate 46 stops in the state shown in FIG. 5B. Then, when the clutch 10 is to be disconnected in synchronization with a speed changing operation of the transmission, in the clutch controlling device 40, the ECU 60 starts driving the motor 42, and the connecting plate 46 starts rotating clockwise against the tensile force of the cam spring 52.

As shown in FIG. 5C, when the stopper hole 46a of the connecting plate 46 is engaged with the stopper pin 50 of the cam plate 48, the cam plate 48 pushes the roller 56 against the elastic force of the diaphragm spring 28 and pushes the pushrod 58 toward the release fork 36, thereby starting the release operation of the clutch 10. When the motor 42 does not directly actuate the cam plate 48, but actuates the cam plate via the cam spring 52 in this manner, variations in the stop position of the connecting plate 46 can be absorbed by the stopper hole 46a; and, even when the stop position of the motor 42 is varied, the cam plate 48 stops at the initial position of the cam 44. Therefore, a predetermined initial load can be stably applied to the clutch release mechanism 30. Note that the initial load works as an applying pressure of the release bearing 34 and reduces the impact to the release bearing 34 upon start of the release operation. However, if the initial load is larger than necessity, clumping force upon connection of the clutch 10 is reduced. Therefore, the initial load has to be an appropriate value. The variations in the stop position of the motor 42 are generated since a rotating part of the motor 42 excessively rotates due to inertia even when the ECU 60 detects the increase in the current and immediately stops power supply to the motor 42. The stopper hole 46a provided in the connecting plate 46 is formed in a minimum range in which the excessive rotation of the motor 42 can be absorbed with respect to the stopper pin 50 provided on the cam plate 48. In the case of the configuration in which the encoder 54 is provided in the motor 42 side, the number of pulses output upon excessive rotation of the motor 42 from the state of FIG. 5A until the state of FIG. 5B is subtracted from the number of pulses output by the encoder 54 from the state of FIG. 5A until the state of FIG. 5C, wherein the numbers of pulses are calculated in advance; and the obtained value can be employed as a correction value of the period from start of the drive of the motor 42 until the cam plate 48 starts forward movement from the state of FIG. 5B until the state of FIG. 5C.

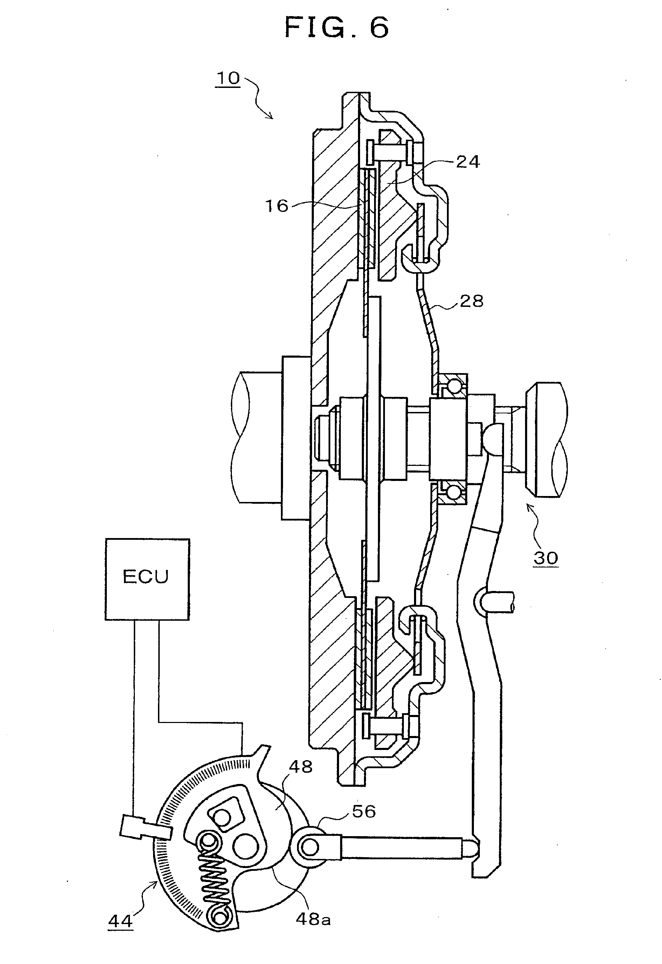

FIG. 6 is an explanatory drawing showing an end state of the release operation in the case of FIG. 4 in which the clutch disc is worn, and FIG. 6 is the same as FIG. 4 except the positional relations of the diaphragm spring 28 and the clutch release mechanism 30 and the position and the state of the cam 44. As well as the end state of the release operation in the case shown in FIG. 3 in which the clutch disc 16 is not worn, the pushing of the pressure plate 24 toward the clutch disc 16 is cancelled to completely disconnect the clutch 10 in the end state of the release operation shown in FIG. 6; therefore, the rotation of the cam plate 48 is stopped in the state in which the stroke part 48a is abutting the roller 56.

However, the positions of the diaphragm spring 28 and the clutch release mechanism 30 are different depending on the difference in the wearing state of the clutch disc 16.

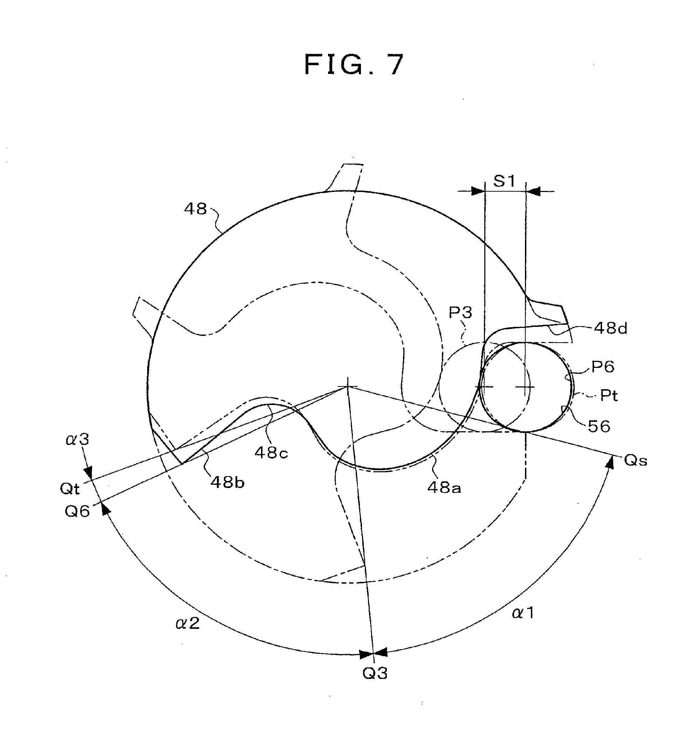

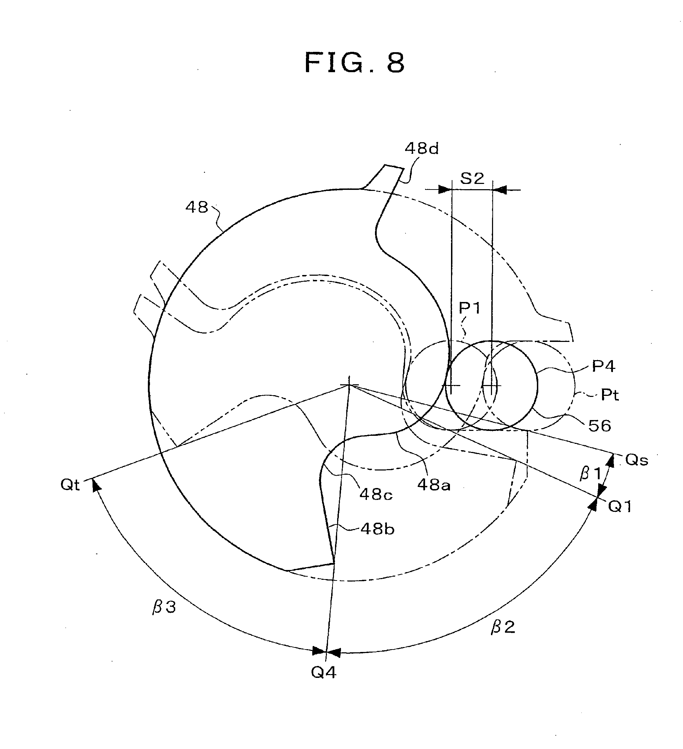

FIG. 7 is an explanatory drawing showing an actuation range of the cam in the case in which the clutch disc is not worn, and FIG. 8 is an explanatory drawing showing an actuation range of the cam in the case in which the clutch disc is worn, particularly, the case in which the clutch disc has reached the wearing limit. Change in the actuation range of the cam caused by wearing of the clutch disc 16 is shown by FIG. 7 and FIG. 8. In FIG. 7, the cam plate 48 rotates clockwise from a save position Qs, at which the roller 56 is abutting the stop part 48b, to a release-operation starting position (initial position) Q3. In this approach range α1, the roller 56 is not moved from an actuation starting position P3 since the roller is not brought into contact with the approach part 48c of the cam plate 48. The cam plate 48 starts the release operation from the release-operation starting position Q3, rotates clockwise, and reaches a release-operation end position Q6. In this stroke range α2, the roller 56 is pushed by the stroke part 48a of the cam plate 48 and moved by a distance S1 from the actuation starting position P3 to an actuation end position P6. The cam plate 48 still has allowance by which the cam plate can be rotated from the release-operation end position Q6 to an end position Qt at which the limit part 48d abuts the roller 56. However, in a normal release operation, this actuation allowed range α3 is not used. Note that, if the state in which the clutch 10 is disconnected is to be continued for a long period of time, the cam plate 48 has to be caused to stand still while electric power distribution to the motor 42 is maintained since pushing of the roller 56 is continued against the elasticity of the diaphragm spring 28. In this case, electric power consumption and heat generation of the motor are increased. In order to prevent this, a retention part at which the pressure angle of the cam surface and the roller 56 is 0 degree is provided at an end region of the stroke part 48a corresponding to the actuation allowed range α3 by causing the region to have a circular-arc shape for which the rotating axis of the cam plate 48 serves as a center, so that, when the roller 56 is positioned at the retention part, moment caused by the elastic force of the diaphragm spring 28 via the roller 56 does not act on the cam plate 48. In other words, when the clutch 10 is to be disconnected for a long period of time, the actuation allowed range α3 configured in this manner is used; as a result, even when electric power distribution to the motor 42 is stopped, the disconnected state of the clutch is maintained, and increase in the electric power consumption and heat generation of the motor can be avoided.

In FIG. 8, an actuation starting position P1 of the roller 56 is moved to be closer to the approach part 48c of the cam plate 48 by a distance corresponding to the reduction in the thickness of the clutch disc 16 than the actuation starting position P3 of FIG. 7. The cam plate 48 rotates clockwise from the save position Qs, at which the roller 56 is abutting the stop part 48b, to a release-operation starting position (initial position) Q1. In this approach range (β1, the roller 56 is not moved from the actuation starting position P1 since the roller is not brought into contact with the approach part 48c of the cam plate 48. The cam plate 48 starts the release operation from the release-operation starting position Q1, further rotates clockwise, and reaches a release-operation end position Q4. In this stroke range (β2, the roller 56 is pushed by the stroke part 48a of the cam plate 48 and is moved by a distance S2 from the actuation starting position P1 to an actuation end position P4. The cam plate 48 still has allowance by which the cam plate can be rotated from the release-operation end position Q4 to an end position Qt at which the limit part 48d abuts the roller 56. However, in a normal release operation, this allowance range β3 is not used. Herein, the stroke part 48a of the cam plate 48 has a cam shape so that the stroke range α2 of FIG. 7 and the stroke range β2 of FIG. 8 are equal or approximately equal to each other. Therefore, the actuation distance S1 of the roller 56 of FIG. 7 and the actuation distance S2 of the roller 56 of FIG. 8 are equal or approximately equal to each other. Furthermore, this cam shape is set so that, in the stroke ranges α2 and β2, the relation between the actuation angle of the cam plate 48 and the actuation amount of the roller 56 is constant or approximately constant.

Therefore, even when the initial position of the cam is moved, the relation between the actuation angle of the cam plate 48 and the actuation amount of the roller 56 is maintained. Therefore, when the release-operation starting position of the cam plate 48, in other words, the initial position of the cam 44 is set, the ECU 60 can drive the motor 42 with predetermined characteristics and carry out disconnection/connection control of the clutch 10 regardless of the wearing state of the clutch disc 16. The present embodiment (the embodiment shown in FIG. 1 to FIG. 8) is configured so that, even when the stop position of the motor 42 is varied, the cam plate 48 is stopped at the initial position of the cam 44 by actuating the cam plate via the connecting plate 46 and the cam spring 52 instead of directly actuating the cam plate 48 by the motor 42. However, the embodiment can be also configured so that the motor 42 directly actuates the cam plate 48 without the intermediation of the connecting plate 46 and the cam spring 52 if the variations in the stop position of the motor 42 are small so that the initial load to the clutch release mechanism 30 is within an allowable range. Moreover, the present embodiment is configured to use the roller 56 as a restricting member which restricts backward movement of the cam 44 when the cam 44 is set at the save position and cause the stop part 48b to abut the roller in the direction in which the roller 56 cannot be moved so as to restrict backward movement of the cam 44. However, it is also possible to configure the embodiment to provide a dedicated stopper as the restricting member so that the stop part of the cam plate 48 abuts the stopper.

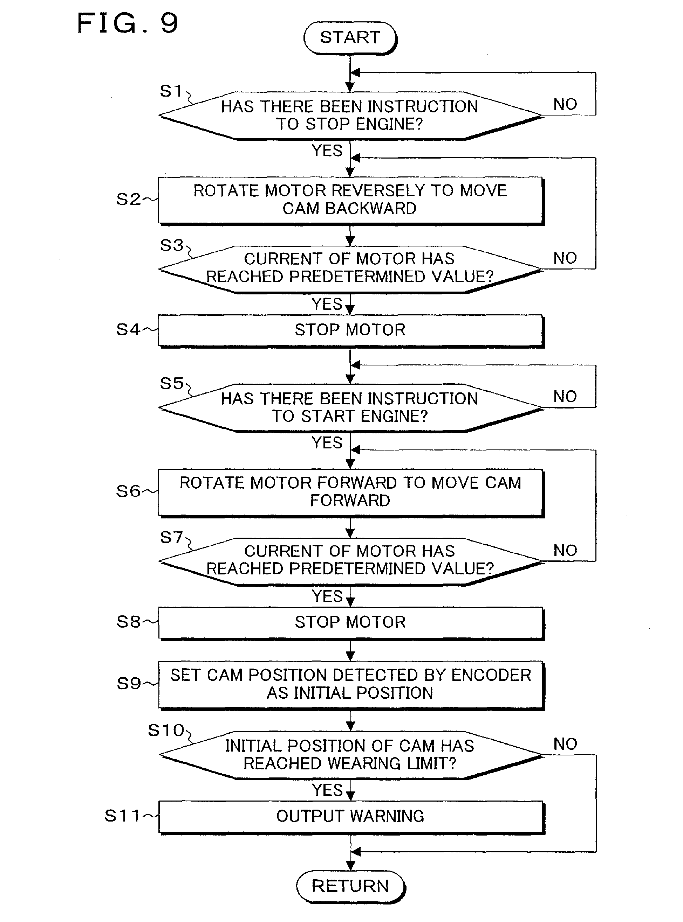

FIG. 9 is a flow chart showing an example of an initial position setting procedure of the clutch controlling device from the state of FIG. 4 to the state of FIG. 5B. In FIG. 9, the ECU 60 judges whether there is an instruction to stop the engine or not in step S1; and, if the stop instruction is determined, the motor 42 is rotated reversely (rotated counterclockwise) to move the cam 44 backward in step S2. Then, in step S3, whether the current of the motor 42 has reached a predetermined value or not is judged; and, if it is determined that the current has reached the predetermined value, the motor 42 is stopped in step S4. When the engine is stopped, the clutch controlling device 40 maintains the standby state as shown in FIG. 4. Then, whether there is an instruction to start the engine or not is judged in step S5; and, if the start instruction is determined, the motor 42 is rotated forward (rotated clockwise) to move the cam 44 forward in step S6. Then, whether the current of the motor 42 has reached a predetermined value or not is judged in step S7; and, if it is determined that the current has reached the predetermined value, the motor 42 is stopped in step S8. When the motor 42 is stopped, in step S9, the position of the cam 44 is detected by the signal from the encoder 54, and the position is set as the initial position of the cam as shown in FIG. 5B. Subsequently, in step S10, whether the initial position of the cam has reached a position corresponding to the wearing limit of the clutch disc 16 which is set in advance or not is judged. If it is determined that the clutch disc 16 has reached the wearing limit, a wearing warning of the clutch disc 16 is output in step S11, and the process returns to step S1. The clutch controlling device 40 maintains the initial position of the cam set in step S9 until an instruction to stop the engine is determined and controls disconnection/connection and transmitted torque of the clutch 10 in synchronization with speed changing operations of the transmission. In the example of the control flow shown in FIG. 9, the cam 44 is at the save position shown in FIG. 4 when the engine is stopped, and the initial position is set at the starting timing of the engine. However, a series of operations of moving the cam 44 backward to the save position and then moving the cam forward to the initial position may be carried out when the engine is stopped, when the engine is started, or at other timing; in that case, the cam 44 maintains the state in which it is stopped at the initial position when the engine is stopped.

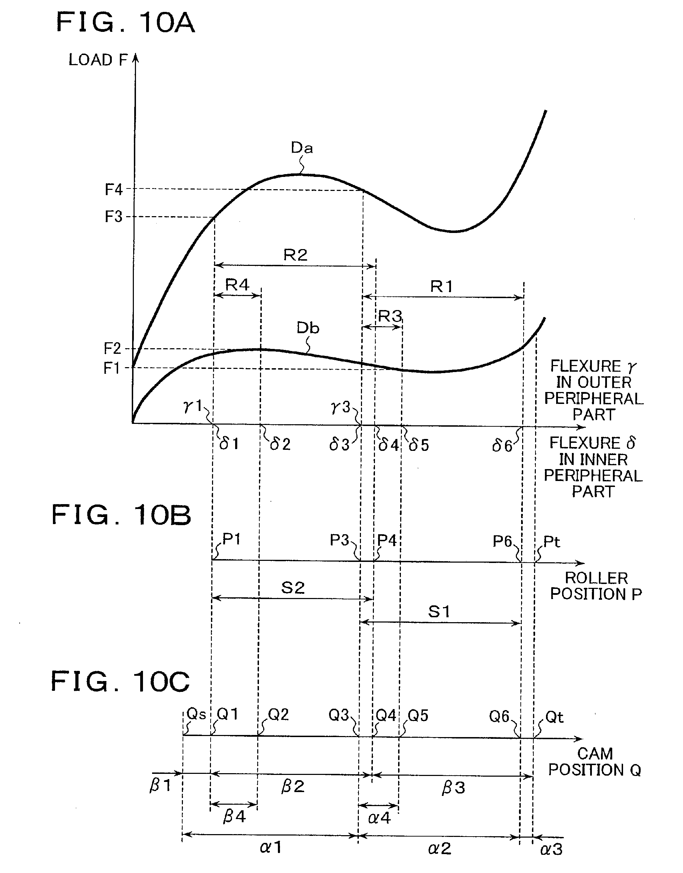

FIGS. 10A to 10C are explanatory drawings showing the relations between the load-flexure characteristics of the diaphragm spring and the actuation ranges of the cam. FIG. 10A shows the load-flexure characteristics of the diaphragm spring by a graph showing flexure by a horizontal axis and showing load by a vertical axis, and FIGS. 10B and 10C are showing the actuation ranges of the roller and the cam (roller stroke and cam stroke) corresponding to that.

In FIG. 10A, a characteristic line Da shows load F and flexure γ at the outer peripheral part 28a of the diaphragm spring 28, which pushes the pressure plate 24, and a characteristic line Db shows load F and flexure δ at the inner peripheral part 28b of the diaphragm spring 28, which is pushed by the release bearing 34. Note that the flexure γ of the outer peripheral part 28a and the flexure δ of the inner peripheral part 28b of this case are actually in mutually opposite directions, but are shown in conversion to the same direction herein. As shown by the characteristic line Da, when the clutch disc 16 is brand-new, the outer peripheral part 28a of the diaphragm spring 28 in the state in which the clutch 10 is completely connected has flexure γ3, and the load toward the pressure plate 24 at that point is F4. When the clutch disc 16 is worn, the outer peripheral part 28a of the diaphragm spring 28 in the state in which the clutch 10 is completely connected has flexure γ1, and the load toward the pressure plate 24 at that point is F3. As shown by the characteristic line Db, the inner peripheral part 28b of the diaphragm spring 28 at the point when the release operation is started has flexure δ3 when the clutch disc 16 is brand-new and has δ1 when the clutch disc 16 is worn.

In FIG. 10B, the flexure δ of the inner peripheral part 28b of the diaphragm spring 28, in other words, the moved position of the release bearing 34 is shown in conversion to the positions P of the roller 56 and are corresponding to the actuation positions and the actuation ranges of the roller 56 shown in FIG. 7 and FIG. 8. When the clutch disc 16 is brand-new, the start position P3 to the end position P6 of the release operation are serving as the actuation range S1 of the roller 56. When the clutch disc 16 is worn, the start position P1 to the end position P4 of the release operation are serving as the actuation range S2 of the roller 56.

In FIG. 10C, the positions Q of the cam 44 corresponding to the positions P of the roller 56 are shown, wherein the positions are corresponding to the actuation positions and the actuation ranges of the cam 44 shown in FIG. 7 and FIG. 8. When the clutch disc 16 is brand-new, the save position Qs of the cam 44 to the initial position Q3 serving as the start position of the release operation are serving as the actuation range α1 of the initial position setting of the cam 44, the initial position Q3 to the end position Q6 are serving as the actuation range α2 of the release operation of the cam 44, and the end position Q6 to the end position Qt are serving as the actuation allowed range α3 after the release operation. When the clutch disc 16 is worn, the save position Qs of the cam 44 to the initial position Q1 serving as the start position of the release operation are serving as the actuation range β1 of the initial position setting of the cam 44, the initial position Q1 to the end position Q4 are serving as the actuation range β2 of the release operation of the cam 44, and the end position Q4 to the end position Qt are serving as the actuation allowed range β3 after the release operation. Herein, in the release operation of the clutch, the release bearing 34 pushes the inner peripheral part 28b of the diaphragm spring 28 in a range R1 from the flexure δ3 to the flexure δ6 when the clutch disc 16 is brand-new or in a range R2 from the flexure δ1 to the flexure δ4 when the clutch disc 16 is worn; wherein, by virtue of the cam shape of the cam 44, the actuation range α2 and the range β2 of the cam 44 corresponding to the range R1 and the range R2 are configured to be equal or approximately equal to each other. However, the amount of change in the flexure from the release-operation starting position to the touch point satisfies a relation of R3<R4, wherein a range R4 from the flexure δ1 to the flexure δ2 of the case in which the clutch disc 16 is worn is larger than a range R3 from the flexure δ3 to the flexure δ5 of the case in which the clutch disc 16 is brand-new. When this relation is caused to correspond to the cam stroke, α4<β4 is obtained. The reason why the strokes to the touch point are different in this manner depending on the degree of wearing of the clutch disc 16 resides in the mechanical rigidity of the clutch release mechanism 30 and the clutch controlling mechanism 40. In the present embodiment, the load F2 of the flexure δ2 is larger than the load F1 of the flexure δ5, wherein a relation of F1<F2 is formed; therefore, compared with the brand-new case, the worn case of the clutch disc 16 in which the load to the release bearing 34 is larger has larger mechanical flexure of the clutch release mechanism 30 and the clutch controlling mechanism 40 near the touch point, and the stroke of the pressure plate 24 to the touch point becomes deeper. Therefore, the clutch controlling device 40 has to control disconnection/connection of the clutch 10 in consideration of the difference between the actuation range α4 from the initial position Q3 to a disconnection position Q5 of the cam 44 (corresponding to the flexure δ3 of the release starting position to the flexure δ5 of the touch point) in the case in which the clutch disc 16 is brand new and the actuation range β4 from the initial position Q1 to a disconnection position Q2 (corresponding to the flexure δ1 of the release starting position to the flexure δ2 of the touch point) in the worn case.

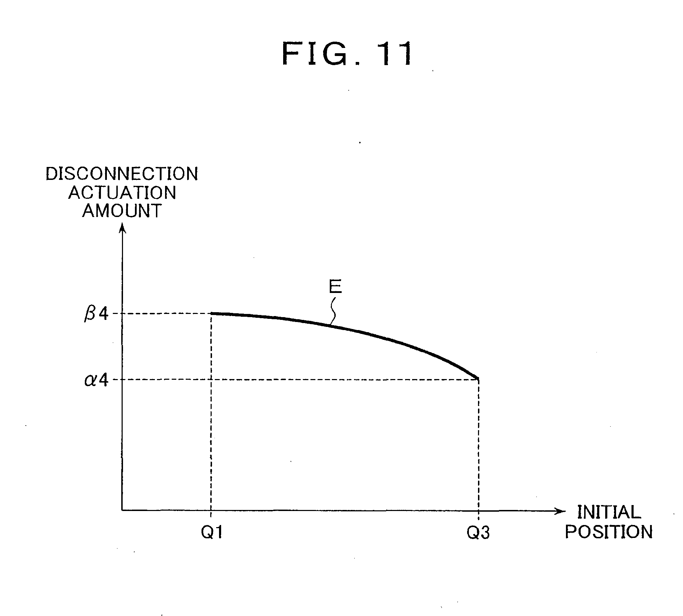

FIG. 11 is an explanatory drawing showing the corresponding relation between movement in the initial position of the cam and movement in the disconnection position of the cam, wherein the characteristics of the initial position to the disconnection actuation amount of the cam are shown so as to correspond to the initial positions of the cam and the actuation amounts to the disconnection positions shown in FIGS. 10A to 10C as a graph showing the initial position of the cam by a horizontal axis and showing the disconnection actuation amount of the cam (actuation amount of the cam from the initial position to the disconnection position) by a vertical axis. In FIG. 11, the disconnection actuation amount at the initial position Q3 of the cam 44 set in the case in which the clutch disc 16 is brand-new is the actuation range α4, the disconnection actuation amount at the initial position Q1 of the cam 44 set in the case in which the clutch disc 16 is at the wearing limit is the actuation range β4, and an example of the characteristics of the initial position to the disconnection actuation amount between the initial position Q3 and the initial position Q1 is shown by a characteristic line E. As the information of the characteristic line E defining the characteristics of the initial position to the disconnection actuation amount of the cam 44, for example, a calculation formula, for example, based on the load-flexure characteristics of the diaphragm spring 28 and the rigidity of the clutch release mechanism 30 or a numerical table obtained in advance by, for example, an actuation experiment or an endurance test of the clutch 10 is stored in the ECU 60 as characteristic information. When the initial position of the cam 44 is to be set, according to this characteristic information, the ECU 60 sets the disconnection actuation amount corresponding to the initial position of the cam 44 and controls disconnection/connection of the clutch 10. Note that, if the load-flexure characteristics of the diaphragm spring 28 are different from that of the present embodiment, the relation between the range R3 and the range R4 according to the degree of wearing of the clutch disc 16 could be reversed. In that case, the actuation range α4 and the actuation range β4 of the cam 44 are also changed, and a characteristic line E different from that of the present embodiment is obtained. Moreover, regarding the movement in the initial position of the cam 44 caused long with wearing of the clutch disc 16, the actuation amount from the initial position of the cam 44 to the start position of half-clutch is also changed in addition to the change in the actuation amount from the initial position to the disconnection position of the cam. Therefore, this change in the actuation amount also has to be taken into consideration when the transmitted torque of the clutch 10 is to be controlled.

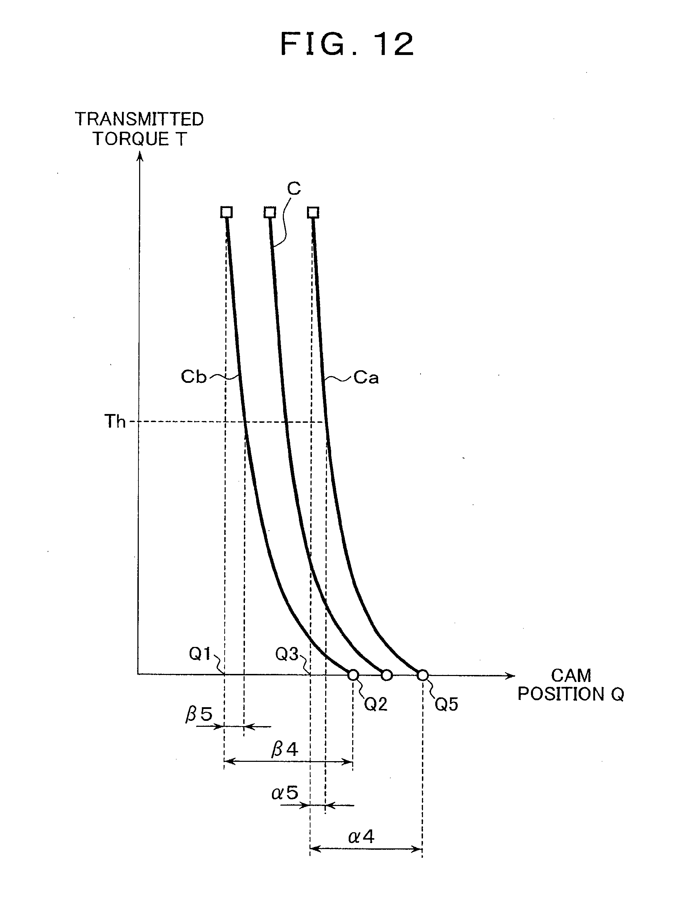

FIG. 12 is an explanatory drawing showing the relation between the actuation positions of the cam and the transmitted torque of the clutch, wherein clutch characteristics are shown so as to correspond to the actuation amounts to the initial positions or the disconnection positions of the cam shown in FIGS. 10A to 10C as a graph showing the cam positions Q by a horizontal axis and showing the transmitted torque T of the clutch by a vertical axis. In FIG. 12, the clutch characteristics shown by the positions Q of the cam 44 and the transmitted torque T of the clutch are shown by a characteristic line C, shown by a characteristic line Ca particularly when the clutch disc 16 is brand-new, and shown by a characteristic line Cb when it is worn. Rectangular marks of the characteristic lines represent the start positions of the release operation of the clutch 10, and round marks represent the touch points. As shown in FIG. 12, the clutch characteristics are moved from the characteristic line Ca to the characteristic line Cb due to wearing of the clutch disc 16; however, this is not simple parallel movement, but also is accompanied by change in the inclination and shape of the characteristic line C. The transmitted torque T of the clutch is basically obtained as a product of the load F of the diaphragm spring 28 that acts on the pressure plate 24 and a friction coefficient **µ** of the clutch disc 16, and the transmitted torque Th of the clutch 10 at which the half-clutch state is started is approximately constant regardless of the degree of wearing of the clutch disc 16. Therefore, when the inclination and shape of the characteristic line C are different, the actuation amount from the initial position of the cam 44 to the half-clutch starting position is also different. In other words, the actuation amount α5 of the cam 44 to the half-clutch starting position in the case in which the clutch disc 16 is brand-new and the actuation amount β5 of the cam 44 to the half-clutch starting position in the case in which the clutch disc 16 is worn are different from each other; and, in the present embodiment a relation of α5<β5 is obtained. As the information of the characteristic line C defining the clutch characteristics, for example, a calculating formula based on the load-flexure characteristics of the diaphragm spring 28 shown in FIGS. l0A to lOC or the characteristics of the initial position to the disconnection actuation amount of the cam 44 shown in FIG. 11 or a plurality of numerical tables corresponding to the movement in the initial position obtained in advance, for example, by actuation experiments or endurance tests of the clutch 10 are stored in the ECU 60 as the correction information. Upon disconnection/connection of the clutch 10, the ECU 60 corrects the actuation position of the cam 44 from the characteristic line C and controls the torque transmission of the clutch 10.

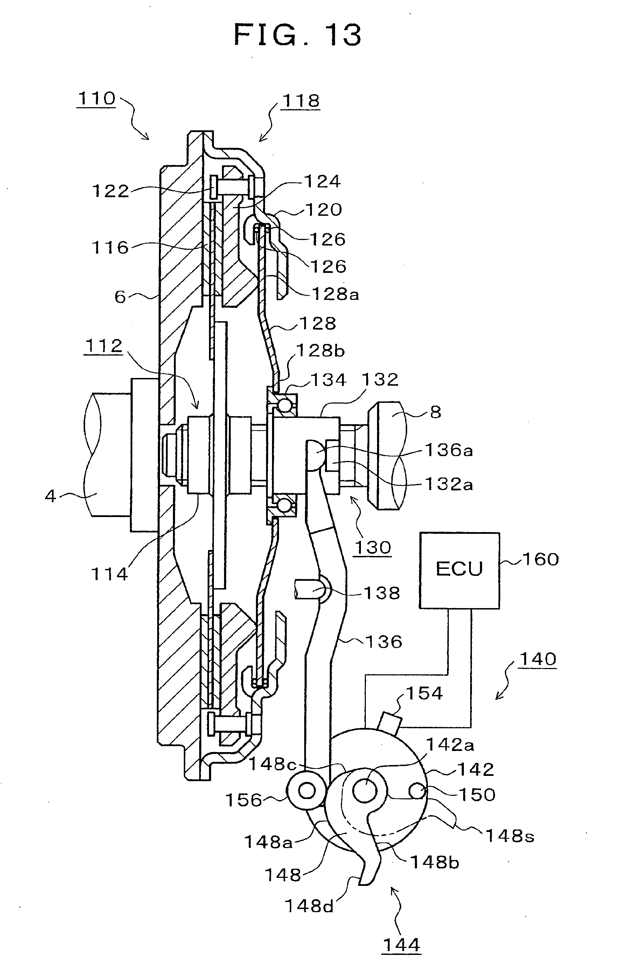

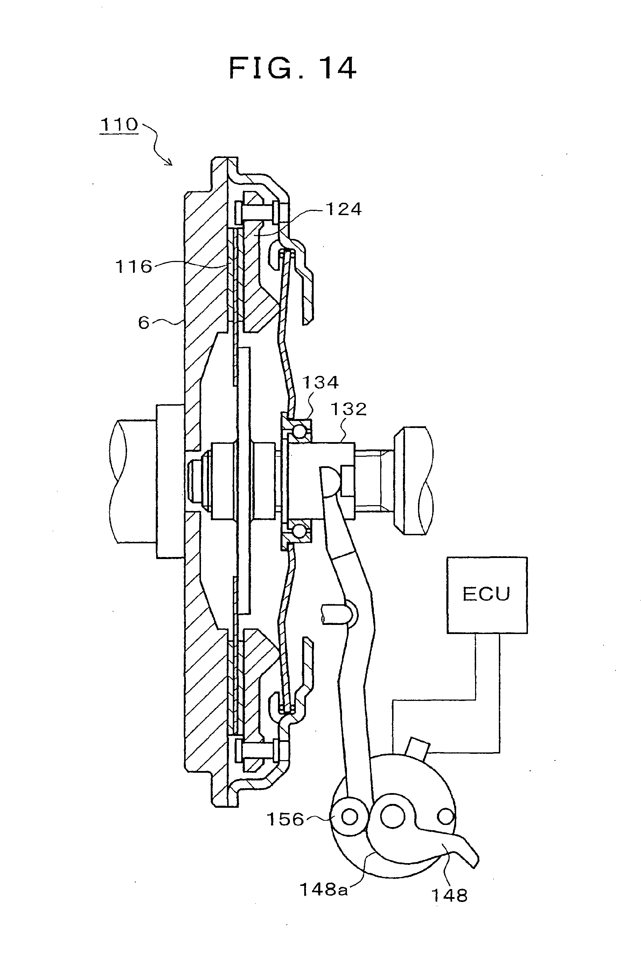

FIG. 13 and FIG. 14 are explanatory drawings of another embodiment of the clutch provided with a clutch controlling device according to the present invention and showing a release-operation starting state in the case in which a clutch disc is not worn in FIG. 13 and in the case in which the clutch disc is worn in FIG. 14. The clutch 10 of the embodiment shown in FIG. 1 to FIG. 8 is a push-type, in other words, is the type in which the clutch is disconnected when the release sleeve 32 is pushed from the transmission side toward the engine side. However, the clutch 110 of the present embodiment is a pull-type, in other words, is the type in which the clutch is disconnected when the release sleeve 32 is pulled from the engine side toward the transmission side. In the pull-type, the actuation direction of the clutch release mechanism is reversed with respect to the push-type. Therefore, in the present embodiment, the arrangement and displacement direction of a cam 144 with respect to a release fork 136 are reversed with respect to the embodiment shown in FIG. 1 to FIG. 8; however, the actuation direction of the cam is configured to be the same. The cam 44 of the embodiment shown in FIG. 1 to FIG. 8 is configured so that the connecting plate 46 coupled to the motor 42 actuates the cam plate 48 via the cam spring 52 and the roller 56 is used as the restricting member which restricts the backward movement of the cam plate 48. However, in a cam 144 of the present embodiment, a cam plate 148 is directly coupled to a motor 142 without the intermediation of an intermediate member, and a stopper pin 150 is provided as a restricting member which restricts the backward movement of the cam plate 148. Furthermore, in the embodiment shown in FIG. 1 to FIG. 8, the roller 56 is provided on the pushrod 58 engaged with the release fork 36. However, in the present embodiment, a roller 156 is provided on a release fork 136 without using the pushrod. In FIG. 13, the clutch 110 is a device which connects/disconnects transmission of torque from the flywheel 6 rotated integrally with the engine output shaft 4 to the transmission input shaft 8 and is composed of: a clutch disc assembly unit 112, a clutch cover assembly unit 118, a clutch release mechanism 130, and the clutch controlling device 140. The clutch disc assembly unit 112 is provided with a clutch hub 114 splined to a distal end of the transmission input shaft 8 and a clutch disc 116 provided at the clutch hub 114 and can be actuated to move forward/backward in the axial direction of the transmission input shaft 8. The clutch cover assembly unit 118 is provided with: a clutch cover 120, which rotates integrally with the flywheel 6; a pressure plate 124, which is guided by guide pins 122 provided on the clutch cover 120 and can be actuated in the axial direction of the engine output shaft 4; and a diaphragm spring 128, which is supported by the clutch cover 120 by employing a pivot ring 126 as a fulcrum point. An intermediate part 128a of the diaphragm spring 128 pushes the clutch disc 116 against the flywheel 6 via the pressure plate 124 by the elasticity employing the pivot ring 126 as the fulcrum point, and the clutch 110 transmits the torque of the engine output shaft 4 to the transmission input shaft 8 via the clutch hub 114 by the friction force generated by sandwiching the clutch disc 116 by the pressure plate 124 and the flywheel 6. The clutch release mechanism 130 is provided with: a release sleeve 132, which is splined to the transmission input shaft 8; a release bearing 134, which has an inner ring fitting in an outer peripheral part of the release sleeve 132; and the release fork 136, which is supported by a fork support 138 provided at a clutch housing (not shown). The release fork 136 forks into two in the release sleeve 132 side, and each of distal end parts 136a thereof is abutting an engaging part 132a provided on the release sleeve 132, and the roller 156 is provided at the other end part. The release fork 136 is slightly biased clockwise by, for example, a spring (not shown). Therefore, the distal end parts 136a try to move the release sleeve 132 toward the clutch hub 114 via the engaging part 132a; however, an outer-ring flange part of the release bearing 134 abuts an inner peripheral part 128b of the diaphragm spring 128 and suppresses movement of the release sleeve 132. The clutch controlling device 140 is provided with: a motor 142, which is an electric actuator; a cam 144, which is driven by the motor 142; an encoder 154 for detecting the position of the cam 144; and an ECU (controlling unit) 160, which drives and controls the motor 142 based on signals from the encoder 154. Herein, the cam 144 is composed only of the cam plate 148 coupled to a drive shaft 142a of the motor 142. The roller 156 smoothly transmits radial displacement of the cam plate 148 to the release fork 136 as the displacement of the cam 144, and the encoder 154 outputs a signal to the ECU 160 as the position of the cam 144 in accordance with the rotation of the motor 142. The cam plate 148 has: a cam-shaped stroke part 148a, which can push the roller 156 in the direction in which the roller 156 is actuated upon clockwise rotation (upon forward movement of the cam); a stop part 148b, which abuts the stopper pin 150 provided on the motor 142 and restricts backward movement upon counterclockwise rotation (upon backward movement of the cam) ; a cam-shaped approach part 148c, which does not push the roller 156; and a limit part 148d, which serves as a clockwise actuation limit (end position of the cam).

In FIG. 13, the cam plate 148 is in the state in which the roller 156 is abutting the stroke part 148a, in other words, the cam 144 is at an initial position. When the ECU 160 drives the motor 142 and rotates the cam plate 148 clockwise from this state, a release operation is started. Note that the cam plate 148s of the case in which the cam 144 is at a save position is shown by an imaginary line. When the release operation is started, the cam plate 148 rotates clockwise from the state of FIG. 13 and pushes the roller 156 by the stroke part 148a; as a result, the release bearing 134 pulls the inner peripheral part 128b of the diaphragm spring 128 via the release fork 136 and the release sleeve 132 in a direction away from the clutch hub 144. The pushing of the release bearing 134 displaces the diaphragm spring 128 in the direction in which the intermediate part 128a gets away from the clutch hub 114 while employing the pivot ring 126 as a fulcrum point. As a result, the pushing force of the intermediate part 128a toward the pressure plate 124 is reduced, and the clutch 110 undergoes a transition from the connected state to the disconnected state via the half-clutch state.

In FIG. 14, the thickness of the worn clutch disk 116 has been reduced from the brand-new state shown in FIG. 13; the clutch 110 is in a completely connected state; and, from the state of FIG. 13, the pressure plate 124, the release sleeve 132, and the release bearing 134 have been moved to the flywheel 6 side. In the cam plate 148, the stroke part 148a is at the position abutting the roller 156. However, since the roller 156 is in the direction toward the center of the cam plate 148 compared with the case of FIG. 13 in which the clutch disc 116 is not worn. Therefore, the release-operation starting position is moved to the front side, in other words, to the counterclockwise side with respect to FIG. 13. Also in the present embodiment, as well as the embodiment shown in FIG. 1 to FIG. 8, the clutch controlling device 140 executes initial value setting by the procedure shown in the flow chart of FIG. 9 and controls disconnection/connection and transmitted torque of the clutch 110 based on the set initial position of the cam. The present invention includes arbitrary modifications that do not impair the object and advantages thereof, and the present invention is not limited by the numerical values, etc. shown in the above described embodiments.

## Claims

1. A clutch controlling device (40) actuating a clutch release mechanism (30) and controlling disconnection/connection and transmitted torque of a clutch (10) by displacement of a diaphragm spring (28) associated with the clutch release mechanism (30); the clutch controlling device (40) comprising:
an electrically driven actuator (42);
a cam (44) capable of being actuated between a save position (Qs) and an end position (Qt) by the actuator (42), the cam (44) changing the clutch (10) from a connected state to a disconnected state by moving forward from an initial position (Q3, Q1) to a disconnection position (Q6, Q4), the cam (44) changing the clutch (10) to the connected state by moving backward from the disconnection position (Q6, Q4) to the initial position (Q3, Q1);
a cam follower (56) capable of being actuated to reciprocate in one direction in association with the forward/backward actuation of the cam, the cam follower (56) transmitting displacement of the cam to the clutch release mechanism (30); and
**characterized in that**
a control unit (60) moving the cam (44) backward and setting a position at which the backward movement is restricted by a restricting member (56) as the save position (Qs) of the cam, the control unit (60) moving the cam (44) forward and setting a position at which pushing of the cam follower (56) is started as the initial position of the cam (Q3, Q1), wherein
the cam (44) is provided with:
a coupling part (46) fixed to a driving part (42a) of the actuator (42),
a cam part (48) having a cam shape and being actuated to move forward/backward in a predetermined range with respect to the coupling part (46), and
a cam spring (52) installed between the coupling part (46) and the cam part (48) and having a spring constant smaller than the diaphragm spring (28); and
the cam part (48)
is moved backward in association with the coupling part (46) when the coupling part (46) actuates the cam part (48) in a direction to move the cam part backward from the initial position (Q3, Q1); and
is moved forward to the initial position (Q3, Q1) by load of the cam spring via the coupling part (46) when the coupling part (46) actuates the cam part (48) in a direction to move the cam part forward from the save position (Qs), then transmits the load of the cam spring to the diaphragm spring (28) within the predetermined range, and then is moved forward in association with the coupling part (46).

2. The clutch controlling device (40) according to claim 1, wherein
the cam (44) has:
a stop part (48b) abutting the restricting member (56) and restricting the backward movement of the cam to the save position (Qs);
an approach part (48c) not pushing the cam follower (56) upon forward movement from the save position (Qs) to the initial position (Q3, Q1); and
a stroke part (48a) pushing the cam follower (56) to an actuating direction and enabling disconnection control of the clutch (10) upon forward movement from the initial position (Qs).

3. The clutch controlling device (40) according to claim 2, wherein
in the cam (44):
the stop part (48b) is a shape to maintain the save position (Qs) regardless of movement in an actuation starting position (P3, P1) of the cam follower (56);
the approach part (48c) is a shape not to push the cam follower (56) regardless of movement in the actuation starting position (P3, P1) of the cam follower (56); and
the stroke part (48a) is a shape to maintain a relation between a forward movement amount of the cam (44) and an actuation amount of the cam follower (56) regardless of movement in the initial position (Q3, Q1) of the cam (44).

4. The clutch controlling device (40) according to claim 2 or 3, wherein
the control unit (60)
drives the actuator (42) to move the cam (44) backward, detects a state change of the actuator (42) at a point when the stop part (48b) of the cam (44) abuts the restricting member (56) and the backward movement is restricted, and sets the save position (Qs) of the cam (44); and
drives the actuator (42) to move the cam (44) forward from the save position (Qs), detects a state change of the actuator (42) at a point when the stroke part (48a) of the cam (44) starts pushing the cam follower (56), and sets the initial position (Q3, Q1) of the cam (44).

5. The clutch controlling device (40) according to claim 4, wherein,
the control unit (60)
detects at least one of a current, speed, and acceleration of the actuator (42) as the state change of the actuator (42) and
sets a position of the cam (44) at a point when the detected value reaches a predetermined value as the save position (Qs) or the initial position (Q3, Q1) of the cam (44).

6. The clutch controlling device (40) according to claim 1, wherein
the control unit (60)
has characteristic information defining a corresponding relation between movement in the initial position (Q3, Q1) of the cam (44) and movement in the disconnection position (Q6, Q4) of the cam (44); and,
when the initial position (Q3, Q1) of the cam (44) is set, determines the disconnection position (Q6, Q4) corresponding to the set initial position (Q3, Q1) and controls the disconnection/connection of the clutch (10) based on the characteristic information.

7. The clutch controlling device (40) according to claim 1, wherein
the control unit (60)
has correction information defining a relation between the actuation position of the cam (44) and the transmitted torque of the clutch (10), the relation defined to correspond to movement in the initial position (Q3, Q1) of the cam (44); and,
when the transmitted torque of the clutch (10) is to be controlled, corrects the actuation position of the cam (44) based on the correction information corresponding to the determined initial position (Q3, Q1) of the cam (44).

8. The clutch controlling device (40) according to claim 1, wherein
the control unit (60) outputs a warning when the initial position (Q3, Q1) of the cam (44) is set to exceed a position corresponding to a wearing limit of a clutch disc (16).

9. The clutch controlling device (40) according to claim 1, wherein
the control unit (60) executes the setting of the initial position (Q3, Q1) of the cam (44) at predetermined timing.

10. The clutch controlling device (40) according to claim 2 or 3, wherein
the cam (44) is provided with a retention part at which a pressure angle with the cam follower (56) is 0 degree, the retention part being provided in an end region of the stroke part (48a).

## Patentansprüche

1. Kupplungssteuervorrichtung (40), die einen Kupplungs-Ausrückmechanismus (30) betätigt und ein Auskuppeln/Einkuppeln und ein übertragenes Drehmoment einer Kupplung (10) durch Verschieben einer dem Kupplungs-Ausrückmechanismus (30) zugehörigen Membranfeder (28) steuert,
wobei die Kupplungssteuervorrichtung (40) umfasst:
- ein elektrisch betriebenes Betätigungsglied (42),
- einen Nocken (44), der geeignet ist, durch das Betätigungsglied (42)zwischen einer Sicherungsposition (Qs) und einer Endposition (Qt) betätigt zu werden, wobei der Nocken (44) durch Vorwärtsbewegen aus einer Ausgangsposition (Q3, Q1) in eine Auskuppelposition (Q6, Q4) die Kupplung (10) von einem eingekuppelten Zustand in einen ausgekuppelten Zustand ändert, wobei der Nocken (44) durch Rückwärtsbewegung von der Auskuppelposition (Q6, Q4) in die Ausgangsposition (Q3, Q1) die Kupplung (10) in den eingekuppelten Zustand ändert,
- einen Nockenfolger (56), der geeignet ist, betätigt zu werden, um sich in Verbindung mit der Vorwärts-/Rückwärts-Betätigung des Nockens in eine Richtung hin- und her zu bewegen, wobei der Nockenfolger (56) die Verschiebung des Nockens auf den Kupplungs-Ausrückmechanismus (30) überträgt,
**dadurch gekennzeichnet,**
- **dass** eine Steuereinheit (60) den Nocken (44) rückwärts bewegt und eine Position festlegt, in der die Rückwärtsbewegung durch ein Beschränkungsglied (56) als Sicherungsposition (Qs) des Nockens beschränkt ist,
- wobei die Steuereinheit (60) den Nocken (44) vorwärts bewegt und eine Position, in der ein Drücken des Nockenfolgers (56) begonnen wird, als Ausgangsposition (Q3, Q1) des Nockens festlegt,
- wobei der Nocken (44) versehen ist mit:
- einem Kopplungsteil (46), welches an einem Antriebsteil (42a) des Betätigungsgliedes (42) befestigt ist,
- einem Nockenteil (48), der eine Nockenform aufweist und der betätigt wird, um sich in einem bestimmten Bereich in Bezug auf den Kopplungsteil (46) vorwärts/rückwärts zu bewegen,
- und einer Nockenfeder (52), die zwischen dem Kopplungsteil (46) und dem Nockenteil (48) installiert ist und die eine Federkonstante aufweist, welche kleiner ist als die der Membranfeder (28),
- und wobei der Nockenteil (48)
- in Verbindung mit dem Kopplungsteil (46) rückwärts bewegt wird, wenn der Kopplungsteil (46) den Nockenteil (48) in eine Richtung betätigt, um den Nockenteil aus der Ausgangsposition (Q3, Q1) rückwärts zu bewegen,
- und durch die Belastung der Nockenfeder über den Kopplungsteil (46) in die Ausgangsposition (Q3, Q1) vorwärts bewegt wird, wenn der Kopplungsteil (46) den Nockenteil (48) in eine Richtung betätigt, um den Nockenteil aus der Sicherungsposition (Qs) vorwärts zu bewegen,
- sodann die Belastung der Nockenfeder auf die Membranfeder (28) innerhalb des bestimmten Bereiches überträgt und dann in Verbindung mit dem Kopplungsteil (46) vorwärts bewegt wird.

2. Kupplungssteuervorrichtung (40) nach Anspruch 1, wobei der Nocken (44) aufweist:
- einen Stoppteil (48b), der an dem Beschränkungsglied (56) anliegt und der die Rückwärtsbewegung des Nockens in die Sicherungsposition (Qs) beschränkt,
- einen Annäherungsteil (48c), der den Nockenfolger (56) auf eine Vorwärtsbewegung aus der Sicherungsposition (Qs) in die Ausgangsposition (Q3, Q1) hin nicht drückt,
- und einen Stoßteil (48a), der den Nockenfolger (56) in eine Betätigungsrichtung drückt und eine Auskupplungssteuerung der Kupplung (10) auf eine Vorwärtsbewegung aus der Ausgangsposition (Qs) hin ermöglicht.

3. Kupplungssteuervorrichtung (40) nach Anspruch 2, wobei in dem Nocken (44)
- der Stoppteil (48b) von einer Form ist, um die Sicherungsposition (Qs) ungeachtet der Bewegung in einer Betätigungs-Ausgangsposition (P3, P1) des Nockenfolgers (56) aufrechtzuerhalten,
- der Annäherungsteil (48c) von einer Form ist, um den Nockenfolger (56) ungeachtet der Bewegung in der Betätigungs-Ausgangsposition (P3, P1) des Nockenfolgers (56) nicht zu drücken,
- und der Stoßteil (48a) von einer Form ist, um eine Beziehung zwischen einem Vorwärtsbewegungsbetrag des Nockens (44) und einem Betätigungsbetrag des Nockenfolgers (56) ungeachtet der Bewegung in der Ausgangsposition (Q3, Q1) des Nockens (44) aufrechtzuerhalten.

4. Kupplungssteuervorrichtung (40) nach Anspruch 2 oder 3, wobei die Steuereinheit (60)
- das Betätigungsglied (42) ansteuert, um den Nocken (44) rückwärts zu bewegen, eine Zustandsänderung des Betätigungsgliedes (42) an einer Stelle detektiert, wenn der Stoppteil (48b) des Nockens (44) an dem Beschränkungsglied (56) anliegt und die Rückwärtsbewegung beschränkt ist, und die Sicherungsposition (Qs) des Nockens (44) festlegt,
- und das Betätigungsglied (42) ansteuert, um den Nocken (44) aus der Sicherungsposition (Qs) vorwärts zu bewegen, eine Zustandsänderung des Betätigungsgliedes (42) an einer Stelle detektiert, wenn der Stoßteil (48a) des Nockens (44) beginnt, den Nockenfolger (56) zu drücken, und die Ausgangsposition (Q3, Q1) des Nockens (44) festlegt.

5. Kupplungssteuervorrichtung (40) nach Anspruch 4, wobei die Steuereinheit (60) zumindest eine Größe der einen Strom, eine Geschwindigkeit und eine Beschleunigung des Betätigungsgliedes (42) umfassenden Größen als Zustandsänderung des Betätigungsgliedes (42) detektiert und eine Position des Nockens (44) an einer Stelle, wenn der detektierte Wert einen bestimmten Wert erreicht, als Sicherungsposition (Qs) oder Ausgangsposition (Q3, Q1) des Nockens (44) festlegt.

6. Kupplungssteuervorrichtung (40) nach Anspruch 1, wobei die Steuereinheit (60)
eine charakteristische Information aufweist, die eine entsprechende Beziehung zwischen der Bewegung in der Ausgangsposition (Q3, Q1) des Nockens (44) und der Bewegung in der Auskuppelposition (Q6, Q4) des Nockens (44) festlegt,
und dann, wenn die Ausgangsposition (Q3, Q1) des Nockens (44) festgelegt ist, die Auskuppelposition (Q6, Q4) entsprechend der festgelegten Ausgangsposition (Q3, Q1) bestimmt und das Auskuppeln/Einkuppeln der Kupplung (10) auf der Grundlage der charakteristischen Information steuert.

7. Kupplungssteuervorrichtung (40) nach Anspruch 1, wobei die Steuereinheit (60)
eine Korrekturinformation aufweist, welche eine Beziehung zwischen der Betätigungsposition des Nockens (44) und dem übertragenen Drehmoment der Kupplung (10) festlegt, wobei die Beziehung festgelegt ist, um der Bewegung in der Ausgangsposition (Q3, Q1) des Nockens (44) zu entsprechen,
und dann, wenn das übertragene Drehmoment der Kupplung (10) zu steuern ist, die Betätigungsposition des Nockens (44) auf der Grundlage der Korrekturinformation entsprechend der bestimmten Ausgangsposition (Q3, Q1) des Nockens (44) korrigiert.

8. Kupplungssteuervorrichtung (40) nach Anspruch 1, wobei die Steuereinheit (60) eine Warnung abgibt, wenn die Ausgangsposition (Q3, Q1) des Nockens (44) so festgelegt ist, um eine Position entsprechend einer Verschleißgrenze einer Kupplungsscheibe (16) zu überschreiten.

9. Kupplungssteuervorrichtung (40) nach Anspruch 1, wobei die Steuereinheit (60) die Festlegung der Ausgangsposition (Q3, Q1) des Nockens (44) zu einem vorgegebenen Zeitpunkt ausführt.

10. Kupplungssteuervorrichtung (40) nach Anspruch 2 oder 3, wobei der Nocken (44) mit einem Rückhalteteil versehen ist, bei dem ein Druckwinkel mit dem Nockenfolger (56) 0 Grad beträgt, wobei der Rückhalteteil in einem Endbereich des Stoßteiles (48a) vorgesehen ist.

## Revendications

1. Dispositif de commande d'embrayage (40) actionnant un mécanisme de débrayage (30) et commandant la déconnexion/connexion et le couple transmis d'un embrayage (10) par le déplacement d'un ressort à diaphragme (28) associé avec le mécanisme de débrayage (30) ; le dispositif de commande d'embrayage (40) comprenant :
un actionneur entraîné électriquement (42) ;
une came (44) pouvant être actionnée entre une position de sauvegarde (Qs) et une position d'extrémité (Qt) par l'actionneur (42), la came (44) faisant passer l'embrayage (10) d'un état connecté à un état déconnecté en avançant d'une position initiale (Q3, Q1) jusqu'à une position de déconnexion (Q6, Q4) la came (44) faisant passer l'embrayage (10) à l'état connecté en reculant de la position de déconnexion (Q6, Q4) à la position initiale (Q3, Q1) ;
un poussoir de came (56) pouvant être actionné pour effectuer un mouvement de va-et-vient dans une direction en association avec l'actionnement vers l'avant/vers l'arrière de la came, le poussoir de came (56) transmettant le déplacement de la came au mécanisme de débrayage (30) ; et
**caractérisé en ce que** :
une unité de commande (60) déplaçant la came (44) vers l'arrière et déterminant une position à laquelle le mouvement vers l'arrière est limité par un élément de limitation (56) en tant que position de sauvegarde (Qs) de la came, l'unité de commande (60) déplaçant la came (44) vers l'avant et déterminant une position à laquelle la poussée du poussoir de came (56) est démarrée en tant que position initiale de la came (Q3, Q1), dans lequel :
la came (44) est prévue avec :
une partie de couplage (46) fixée à une partie d'entraînement (42a) de l'actionneur (42),
une partie de came (48) ayant une forme de came et étant actionnée pour avancer/reculer dans une plage prédéterminée par rapport à la partie de couplage (46), et
un ressort de came (52) installé entre la partie de couplage (46) et la partie de came (48) et ayant une constante de rappel inférieure au ressort à diaphragme (28) ;
et
la partie de came (48)
est reculée en association avec la partie de couplage (46) lorsque la partie de couplage (46) actionne la partie de came (48) dans une direction afin de faire reculer la partie de came par rapport à la position initiale (Q3, Q1) ; et
est avancée jusqu'à la position initiale (Q3, Q1) par la charge du ressort de came via la partie de couplage (46) lorsque la partie de couplage (46) actionne la partie de came (48) dans une direction de sorte que la partie de came avance par rapport à la position de sauvegarde (Qs), transmet ensuite la charge du ressort de came au ressort à diaphragme (28) dans la plage prédéterminée, et est ensuite avancée en association avec la partie de couplage (46).

2. Dispositif de commande d'embrayage (40) selon la revendication 1, dans lequel :
la came (44) a :
une partie de butée (48b) venant en butée contre l'élément de limitation (56) et limitant le mouvement vers l'arrière de la came jusqu'à la position de sauvegarde (Qs) ;
une partie d'approche (48c) ne poussant pas le poussoir de came (56) suite au mouvement vers l'avant de la position de sauvegarde (Qs) à la position initiale (Q3, Q1) ; et
une partie de frappe (48a) poussant le poussoir de came (56) dans une direction d'actionnement et permettant la commande de déconnexion de l'embrayage (10) suite au mouvement vers l'avant à partir de la position initiale (Qs).

3. Dispositif de commande d'embrayage (40) selon la revendication 2, dans lequel :
dans la came (44) :
la partie de butée (48b) a une forme pour maintenir la position de sauvegarde (Qs) indépendamment du mouvement dans une position de début d'actionnement (P3, P1) du poussoir de came (56) ;
la partie d'approche (48c) a une forme pour ne pas pousser le poussoir de came (56) indépendamment du mouvement dans la position de début d'actionnement (P3, P1) du poussoir de came (56) ; et
la partie de frappe (48a) a une forme pour maintenir une relation entre une quantité de mouvement vers l'avant de la came (44) et une quantité d'actionnement du poussoir de came (56) indépendamment du mouvement dans la position initiale (Q3, Q1) de la came (44).

4. Dispositif de commande d'embrayage (40) selon la revendication 2 ou 3, dans lequel :
l'unité de commande (60) :
entraîne l'actionneur (42) pour faire reculer la came (44), détecte un changement d'état de l'actionneur (42) à un point lorsque la partie de butée (48b) de la came (44) vient en butée contre l'élément de limitation (56) et le mouvement vers l'arrière est limité, et détermine la position de sauvegarde (Qs) de la came (44) ; et
entraîne l'actionneur (42) pour faire avancer la came (44) à partir de la position de sauvegarde (Qs), détecte un état de changement de l'actionneur (42) à un point lorsque la partie de frappe (48a) de la came (44) commence à pousser le poussoir de came (56) et détermine la position initiale (Q3, Q1) de la came (44).

5. Dispositif de commande d'embrayage (40) selon la revendication 4, dans lequel :
l'unité de commande (60) :
détecte au moins l'un parmi un courant, une vitesse et une accélération de l'actionneur (42) en tant que changement d'état de l'actionneur (42), et
détermine une position de la came (44) à un point lorsque la valeur détectée atteint une valeur prédéterminée en tant que position de sauvegarde (Qs) ou position initiale (Q3, Q1) de la came (44).

6. Dispositif de commande d'embrayage (40) selon la revendication 1, dans lequel :
l'unité de commande (60) :
a des informations caractéristiques définissant une relation correspondante entre le mouvement dans la position initiale (Q3, Q1) de la came (44) et le mouvement dans la position de déconnexion (Q6, Q4) de la came (44) ; et
lorsque la position initiale (Q3, Q1) de la came (44) est déterminée, détermine la position de déconnexion (Q6, Q4) correspondant à la position initiale de consigne (Q3, Q1) et commande la déconnexion/connexion de l'embrayage (10) en fonction des informations caractéristiques.

7. Dispositif de commande d'embrayage (40) selon la revendication 1, dans lequel :
l'unité de commande (60) :
a une information de correction définissant une relation entre la position d'actionnement de la came (44) et le couple transmis de l'embrayage (10), la relation définie pour correspondre au mouvement dans la position initiale (Q3, Q1) de la came (44) ; et
lorsque le couple transmis de l'embrayage (10) doit être commandé, corrige la position d'actionnement de la came (44) en fonction de l'information de correction correspondant à la position initiale (Q3, Q1) déterminée de la came (44).

8. Dispositif de commande d'embrayage (40) selon la revendication 1, dans lequel :
l'unité de commande (60) émet un avertissement lorsque la position initiale (Q3, Q1) de la came (44) est déterminée pour dépasser une position correspond à une limite d'usure d'un disque d'embrayage (16).

9. Dispositif de commande d'embrayage (40) selon la revendication 1, dans lequel :
l'unité de commande (60) exécute le réglage de la position initiale (Q3, Q1) de la came (44) à un calage prédéterminé.

10. Dispositif de commande d'embrayage (40) selon la revendication 2 ou 3, dans lequel :
la came (44) est prévue avec une partie de retenue à laquelle un angle de pression avec le poussoir de came (56) est de 0 degré, la partie de retenue étant prévue dans une région d'extrémité de la partie de frappe (48a).
